# FASCICULE DE BREVET EUROPEEN

(11) **EP 3 649 749 B1**
(45) Date de publication et mention de la délivrance du brevet: **06.10.2021**
(21) Numéro de dépôt: 18752565.4
(22) Date de dépôt: 06.07.2018
(51) Int. Cl.: H04B 7/12, H04W 72/02, G01D 4/00, G06F 8/65

(54) **PROCÉDÉ DE MISE À JOUR D'UN LOGICIEL EMBARQUÉ DANS DES TERMINAUX DE TÉLÉ-RELÈVE**
VERFAHREN ZUR AKTUALISIERUNG EINER IN FERNLESETERMINALS INTEGRIERTEN SOFTWARE
METHOD FOR UPDATING SOFTWARE INTEGRATED INTO REMOTE READING TERMINALS

(30) Priorité: 07.07.2017 FR 1756435
(43) Date de publication de la demande: 13.05.2020
(73) Titulaire: Kerlink, 35235 Thorigne-Fouillard (FR)
(72) Inventeur: DELIBIE, Yannick, 35235 Thorigne-Fouillard (FR); CATALANO, Julien, 35235 Thorigne-Fouillard (FR)
(74) Mandataire: Loyer & Abello
(86) Numéro de dépôt international: PCT/FR2018/051709
(87) Numéro de publication internationale: WO 2019/008300

(56) Documents cités:
- WO-A1-00/24120
- US-A1- 2007 013 547
- US-A1- 2011 103 299

## Description

### Domaine technique

L'invention se rapporte au domaine des installations de télé-relève.

### Arrière-plan technologique

Une installation de télé-relève comprend classiquement plusieurs terminaux de télé-relève, par exemple des compteurs d'eau ou de gaz, configurés pour mesurer une consommation, et transmettre les informations issues de ces mesures de consommation à des concentrateurs, généralement par liaison radiofréquence, les concentrateurs transmettant ensuite les données reçues des terminaux de télé-relève à un serveur de gestion auquel ils sont reliés généralement par l'intermédiaire d'un réseau de télécommunication.

Les logiciels embarqués dans les terminaux de télé-relève doivent parfois être mis à jour. Pour ce faire, les données de mises à jour sont transmises du serveur de gestion aux concentrateurs, puis émises par les concentrateurs à destination des terminaux de télé-relève.

Le problème est qu'un terminal de télé-relève est souvent dans la zone d'émission de plusieurs concentrateurs. Or, si un terminal reçoit simultanément des signaux radiofréquence de plusieurs concentrateurs sur des fréquences identiques ou proches, le signal reçu par le terminal est brouillé, ce qui génère des collisions de paquets. Il s'ensuit des erreurs de transmission et une baisse du débit reçu par le terminal et les données de mise à jour risquent de ne pas être reçues correctement.

Plusieurs solutions ont été proposées pour régler ce problème d'interférence.

Une première solution connue, est décrite notamment dans le document EP2661050 au nom de ITRON, qui enseigne de sélectionner dans le temps les collecteurs de données (concentrateurs), pour éviter les interférences. ITRON enseigne donc une répartition temporelle des émissions, qui consiste à étaler dans le temps les émissions des différents concentrateurs, les concentrateurs étant organisés en groupe, chaque groupe de concentrateurs émettant sur une plage temporelle distincte. Cette solution permet de supprimer les interférences mais présente l'inconvénient d'allonger la durée globale de la mise à jour.

Une deuxième solution connue, est décrite également dans le document EP2661050 au nom de ITRON, qui enseigne de sélectionner physiquement les collecteurs de données (concentrateurs), pour éviter les interférences. ITRON enseigne donc une répartition spatiale des émissions, les collecteurs de données (concentrateurs) étant sélectionnés de manière à empêcher les collecteurs adjacents de transmettre au même moment,

Le document FR3016031 au nom de GRDF divulgue également une répartition spatiale des émissions, pour éviter les interférences qui résulteraient de la superposition possible de plusieurs émissions quasi-simultanées sur des mêmes bandes fréquences. GRDF consiste à sélectionner un nombre réduit de concentrateurs pour émettre les données de mise à jour. Cette solution permet de ne pas allonger la durée globale de la mise à jour mais est en pratique très difficile à mettre en œuvre. En effet, elle nécessite de connaitre la position de chaque terminal de télé-relève par rapport aux zones d'émission de chaque concentrateur. Par ailleurs, la sélection d'un sous-ensemble de concentrateurs parmi l'ensemble des concentrateurs de sorte que les terminaux de télé-relève soient dans la zone d'émission de un et un seul de ces concentrateurs est un problème d'optimisation combinatoire. Trouver une solution à ce problème d'optimisation combinatoire est un problème facile en théorie puisqu'il suffit de tester toutes les solutions. Cependant, la méthode peut en pratique être impossible à mettre en œuvre car tester toutes les solutions prendrait trop de temps. En outre, dans la plupart des cas, il n'existe pas de sous-ensemble de concentrateurs tel que tous les terminaux de télé-relève sont dans la zone d'émission de un et un seul de ces concentrateurs et par conséquent il n'est pas possible de supprimer complètement les interférences.

Le document US 2011/103299 A1 divulgue un réseau maillé comprenant un nœud central et des nœuds en communication bidirectionnelle avec le nœud central ainsi qu'un procédé pour ledit réseau.

Un but de l'invention est de proposer un procédé alternatif à la répartition temporelle ou spatiale, qui permette d'éviter les interférences lors de la mise à jour des terminaux de télé-relève.

### Résumé

A l'inverse des solutions connues, qui consistent à décaler dans le temps les émissions ou à réduire le nombre de concentrateurs émettant simultanément, une idée à la base de l'invention est de réaliser une répartition spectrale des émissions, à savoir à transmettre, de préférence simultanément par tous les concentrateurs, les données de mise à jour sur différents canaux radio, de préférence chacun sur un canal radio différent, de manière à limiter les interférences entre les signaux émis par les différents concentrateurs.

L'invention fournit un procédé de mise à jour d'un logiciel embarqué dans une pluralité de terminaux de télé-relève à mettre à jour d'une installation de télé-relève selon la revendication 1.

L'invention fournit, en outre, une installation de télé-relève selon la revendication 12. Les revendications dépendantes 2 à 11 définissent des modes de réalisation préférés.

Selon des modes de réalisation, un tel procédé de mise à jour peut comporter une ou plusieurs des caractéristiques suivantes.

Selon certains modes de réalisation, au cours de l'étape de sélection d'un canal de réception, un terminal de télé-relève règle, au cours d'une étape d'écoute, son récepteur sur un canal radio de réception candidat pendant une période d'écoute d'une durée prédéterminée, et si, au cours de cette période d'écoute, il reçoit une trame de données de mise à jour, il sélectionne ledit canal radio de réception, et si, au cours de cette période d'écoute, il ne reçoit pas de trame de données de mise à jour, il répète l'étape d'écoute sur un autre canal radio de réception candidat.

Selon certains modes de réalisation, un terminal de télé-relève détermine si une trame de données de mise à jour a été reçue en utilisant un code de détection d'erreur.

Selon certains modes de réalisation, le canal radio d'émission de chaque concentrateur est sélectionné aléatoirement parmi l'ensemble de canaux radio d'émission.

Selon certains modes de réalisation, les concentrateurs émettent, préalablement à la deuxième étape de transmission des données de mise à jour des concentrateurs aux terminaux de télé-relève, un message de planification à destination des terminaux de télé-relève, le message de planification indiquant un instant de début de diffusion des données de mise à jour.

Selon certains modes de réalisation, le message de planification est envoyé par chaque concentrateur successivement à l'ensemble des terminaux de télé-relève.

Selon certains modes de réalisation, chaque terminal de télé-relève règle son récepteur sur un seul canal radio à la fois.

Selon certains modes de réalisation, chaque concentrateur émet les données de mise à jour sur un seul canal radio à la fois.

Selon certains modes de réalisation, l'ensemble des concentrateurs émet les données de mise à jour de manière simultanée.

Selon certains modes de réalisation, l'attribution des canaux radiofréquences d'émission pour chaque concentrateur est faite par le serveur de gestion.

Selon certains modes de réalisation, chaque concentrateur choisit son canal radio d'émission, en analysant le spectre radiofréquence qu'il capte et en sélectionnant un des canaux d'émission les moins encombrés.

### Brève description des figures

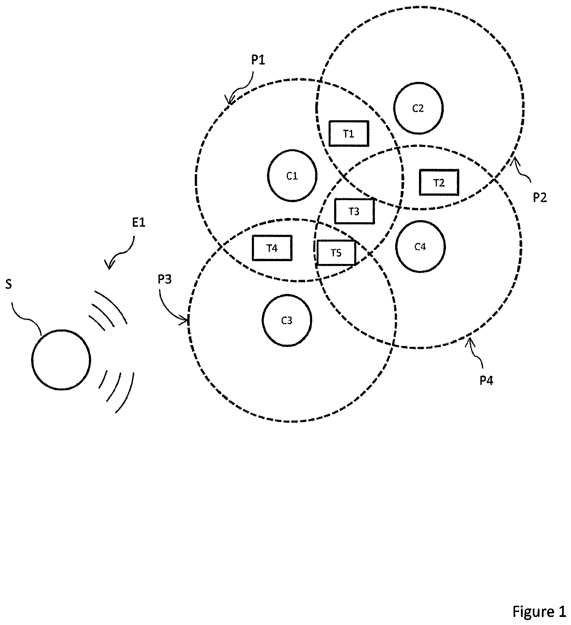

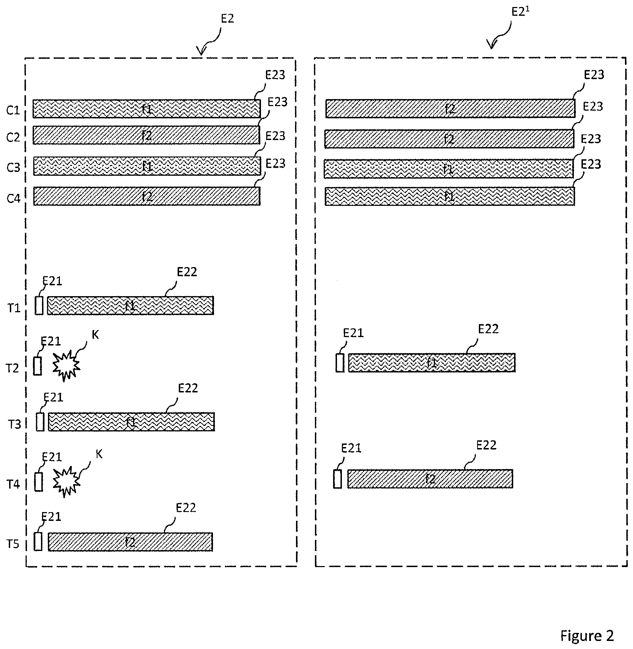

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une représentation schématique d'une d'installation de télé-relève.
- **La** **figure 2** illustre des étapes de transmission des données de mise à jour des collecteurs aux terminaux de télé-relève dans un exemple de mise en œuvre d'un mode de réalisation de l'invention dans l'installation de télé-relève de la figure 1.

### Description détaillée de modes de réalisation

La figure 1 illustre une installation de télé-relève comportant au moins un serveur de gestion S, une pluralité de concentrateurs C1-C4, et une pluralité de terminaux de télé-relève T1-T5.

Un concentrateur C1-C4 est un dispositif informatique qui concentre les communications de données reçues des terminaux de télé-relève T1-T5 et les transmet au serveur de gestion S. Un concentrateur C1-C4 est également capable de distribuer des communications de données reçues du serveur de gestion S à destination des terminaux de télé-relève T1-T5.

Le serveur de gestion S communique de manière bidirectionnelle avec les concentrateurs C1-C4, par exemple via un réseau de télécommunication tel que le réseau internet. A cet effet, le serveur de gestion S et chaque concentrateur C1-C4 comprend, par exemple, une carte réseau, un microprocesseur et une mémoire interne.

Chaque terminal de télé-relève T1-T5 comporte un ou plusieurs compteurs, tels que des compteurs de consommation de gaz, d'eau ou d'électricité, Chaque terminal de télé-relève T1-T5 peut en outre par exemple comporter une alimentation, un micro-processeur, et une mémoire interne.

Chaque terminal de télé-relève T1-T5 est configuré pour émettre régulièrement à destination des concentrateurs C1-C4 des données de télé-relève comportant des informations issues des mesures de son ou ses compteur(s). A cet effet, chaque terminal de télé-relève T1-T5 est équipé d'un émetteur radiofréquence.

Les concentrateurs C1-C4 sont configurés pour recevoir des données de relève de la part des terminaux de télé-relève. A cet effet, les concentrateurs C1-C4 comportent un récepteur radiofréquence configuré pour recevoir les données de télé-relève émises par les terminaux de télé-relève. Les concentrateurs C1-C4 transmettent ensuite les données de télé-relève reçus au serveur de gestion S.

Les concentrateurs C1-C4 sont en outre configurés pour recevoir des données de mise à jour de la part du serveur de gestion S et pour émettre lesdites donnés de mise à jour à destination des terminaux de télé-relève T1-T5. A cet effet, chaque concentrateur C1-C4 comporte un émetteur radiofréquence. Certains et préférentiellement tous les concentrateurs C1-C4 peuvent régler la fréquence d'émission de leur émetteur sur différents canaux radio d'émission. L'ensemble des canaux radio sur lesquels peuvent émettre les concentrateurs forme un ensemble de canaux radio d'émission.

Les terminaux de télé-relève T1-T5 sont configurés pour recevoir des données de mise à jour de la part des concentrateurs C1-C4. A cet effet, chaque terminal de télé-relève T1-T5 est équipé d'un récepteur radiofréquence ajustable en fréquence. Dans certains modes de réalisation, chaque terminal de télé-relève T1-T5 peut régler la fréquence de réception de son récepteur sur chacun des canaux radio de l'ensemble de canaux radio d'émission des concentrateurs. Dans d'autres modes de réalisation, certains terminaux de télé-relève T1-T5 ne peuvent régler la fréquence de réception de leur récepteur que sur un sous-ensemble des canaux radio d'émission des concentrateurs.

Dans certains modes de réalisation, chaque terminal de télé-relève T1-T5 est associé à un concentrateur C1-C4, dit concentrateur associé, et ne transmet ses données de télé-relève que à son concentrateur associé C1-C4 qui les transmet au serveur de gestion S. L'association d'un terminal de télé-relève T1-T5 à un concentrateur C1-C4 peut être effectuée lors de l'initialisation du terminal de télé-relève T1-T5. Par exemple, le serveur de gestion S peut associer un terminal de télé-relève au concentrateur recevant le mieux le signal du terminal de télé-relève en cours d'initialisation.

Dans certains modes de réalisation, les terminaux de télé-relève T1-T5 émettent leurs données de télé-relève à destination de tous les concentrateurs C1-C4 qui les transmettent au serveur de gestion S qui se charge de supprimer les données de télé-relève reçus de manière redondante.

Le procédé de mise à jour du logiciel embarqué dans la pluralité de terminaux de télé-relève T1-T5 à mettre à jour comporte une étape E1 de transmission des données de mise à jour du serveur de gestion S aux concentrateurs C1-C4 et au moins une étape E2 de transmission des données de mise à jour des concentrateurs C1-C4 aux terminaux de télé-relève T1-T5 situés dans les zones de portée d'émission respectives P1 à P4 des concentrateurs C1-C4 (voir Figure 1).

Dans certains modes de réalisation, les concentrateurs C1-C4 et les terminaux de télé-relève T1-T5 de l'installation sont synchronisés sur un même horaire. La synchronisation peut notamment être initiée par le serveur de gestion S qui peut, par exemple, régulièrement envoyer un message de synchronisation à tous les concentrateurs C1-C4, chaque concentrateur C1-C4 émettant ensuite le message de synchronisation reçu à destination des terminaux de télé-relève.

Dans certains modes de réalisation, pour limiter leur consommation d'énergie, et en particulier, s'ils sont alimentés par pile électrique, pour augmenter leur durée d'autonomie énergétique, les terminaux de télé-relève T1-T5 n'activent pas leur récepteur en continu. Des plages d'activation au cours desquelles les terminaux de télé-relèves activent leur récepteur sont prévues. Le serveur de gestion S et/les concentrateurs C1-C4 ont connaissance de ces plages d'activation. Ces plages d'activation peuvent par exemple être consécutives à l'émission de données de télé-relève.

Lorsqu'une mise à jour logicielle est planifiée, le serveur de gestion S transmet un message de planification à tous les concentrateurs C1-C4. Le message de planification indique la plage temporelle au cours de laquelle il est prévu que les données de mise à jour soient émises. Le message de planification peut par exemple comprendre un instant de début de diffusion des données de mise à jour. Les concentrateurs C1-C4 émettent, préalablement à l'étape de transmission des données de mise à jour des concentrateurs C1-C4 aux terminaux de télé-relève T1-T5, le message de planification à destination des terminaux de télé-relève T1-T5. Les concentrateurs C1-C4 émettent le message de planification pendant les plages d'activation au cours desquelles les récepteurs des terminaux de télé-relèves T1-T5 sont activés.

Dans certains modes de réalisation, pendant les plages d'activation, les terminaux règlent tous leur récepteur sur un même canal radio connu des concentrateurs, et les concentrateurs C1-C4 émettent le message de planification sur ledit canal radio successivement en unicast à l'ensemble des terminaux de télé-relève. Comme le temps nécessaire pour transmettre le message de planification est relativement faible, le fait de répartir dans le temps la transmission du message de panification aux terminaux de télé-relève ne rallonge pas le procédé de mise à jour de manière excessive. Lorsqu'un terminal de télé-relève T1-T5 reçoit un message de planification, il prévoit d'activer son récepteur avant l'instant de début de diffusion des données de mise à jour. Lorsqu'un terminal de télé-relève T1-T5 reçoit un message de planification, il peut en outre émettre à destination des concentrateurs (ou de son ou ses concentrateurs associés) un message accusant réception du message de planification.

Au cours de l'étape E1, chaque concentrateur C1-C4 reçoit les données de mise à jour de la part du serveur de gestion S. Si un instant de début de diffusion est planifié, le serveur de gestion S transmet les données de mise à jour aux concentrateurs C1-C4 avant l'instant de début de diffusion.

L'étape E2 est décrite en référence à la figure 2 qui illustre un exemple de mise en œuvre particulier donné uniquement à titre illustratif.

Au cours de l'étape E2 de transmission des données de mise à jour des concentrateurs C1-C4 aux terminaux de télé-relève T1-T5, chaque concentrateur C1-C4 émet, au cours d'une étape E23 d'émission qui commence à l'instant de début de diffusion, les données de mise à jour sur un canal radio sélectionné parmi l'ensemble de canaux radio d'émission. Un canal radio est une sous-bande de fréquences radioélectriques destinée à être utilisée pour transmettre des signaux. Le terme radiofréquence désigne les ondes radio dont le spectre est situé entre 3 kHz et 300 GHz. A titre d'exemple, les canaux radio d'émission peuvent être des sous-bandes de bandes Gigahertz centrées autour de 169 MHz, 433 MHz, 868 MHz ou 915 MHz.

Le fait d'attribuer des canaux radio d'émission différents aux différents concentrateurs permet de réduire les interférences entre les différents signaux émis, et par conséquent limiter les collisions et les erreurs de transmission et la baisse du débit reçu qu'elles engendrent. Chaque concentrateur C1-C4 peut émettre les données de mise à jour sur un seul canal radio à la fois ou sur plusieurs canaux radio d'émission à la fois.

Le canal radio d'émission de chaque concentrateur C1-C4 peut notamment être sélectionné aléatoirement parmi l'ensemble de canaux radio d'émission. La sélection aléatoire des canaux radio d'émission est une manière simple et efficace de répartir les canaux radio d'émission parmi les différents concentrateurs.

L'attribution des canaux radiofréquences d'émission peut être faite par le serveur de gestion S. Pour chaque concentrateur C1-C4 l'attribution peut en particulier se faire de manière aléatoire et indépendante de l'attribution des canaux radiofréquences des autres concentrateurs. Alternativement chaque concentrateur C1-C4 peut lui-même choisir son canal radio d'émission. En particulier, un concentrateur C1-C4 peut analyser le spectre radiofréquence qu'il capte et sélectionner un des canaux d'émission les moins encombrés.

Pour garantir une bonne réception de ces données, les concentrateurs C1-C4 peuvent transmettre les données de mise à jour de manière redondante au cours d'une même étape d'émission et par exemple plusieurs fois de manière consécutive au cours d'une même étape d'émission E23. Les données de mise à jour peuvent également comprendre un code correcteur d'erreur. Cette redondance peut permettre aux terminaux de télé-relève T1-T5 de corriger les données reçues en cas de transmission incomplète. L'étape d'émission E23 peut être ininterrompue ou interrompue par des périodes de pause. En pratique, l'utilisation de certaines bandes radio est réglementée et limitée dans le temps. Pour respecter ces réglementations, il peut être nécessaire d'échelonner l'étape d'émission E23 sur plusieurs jours.

De manière simultanée avec l'étape d'émission E23, c'est à dire pendant que les concentrateurs C1-C4 émettent les données de mise à jour, chaque terminal de télé-relève T1-T5 sélectionne, au cours d'une étape E21 de sélection d'un canal de réception, un canal radio de réception parmi l'ensemble de canaux radio d'émission des concentrateurs.

Pour sélectionner un canal de réception, un terminal de télé-relève T1-T5 évalue la qualité du signal reçu sur différents canaux de réception candidats, et sélectionne un canal radio de réception pour lequel la qualité du signal reçu est la meilleure ou du moins suffisante pour permettre une réception effective des données de mise à jour, de préférence en un temps raisonnable.

On entend par réception effective des données de mise à jour, le fait que les données de mise à jour puissent produire leurs effets lorsque le signal est reçu par le terminal. On entend par temps raisonnable une durée prédéterminée, correspondant par exemple à tout ou partie de du temps total d'émission des données de mise à jour au cours d'une étape d'émission E23.

Les canaux de réception candidats sont les canaux radio d'émission sur lesquels les concentrateurs sont susceptibles d'émettre les données de mise à jour. Les canaux de réception candidats sont donc sélectionnés parmi l'ensemble des canaux d'émission. L'information relative aux canaux de l'ensemble des canaux d'émission peut être préenregistrée dans la mémoire de terminaux de télé-relève lors de leur installation. Cette information peut être mise à jour par exemple lors d'une mise à jour logicielle. Un concentrateur peut également au cours d'une étape préalable à l'étape E21, émettre à destination des terminaux de télé-relève localisés dans sa zone d'émission, un signal encodant l'information relative aux canaux radio d'émission sur lesquels il est susceptible d'émettre les données de mise à jour.

Le terminal peut en particulier considérer que la qualité du signal reçu permet une réception effective des données de mise à jour si, au cours d'une période d'écoute d'une durée prédéterminée, une trame est reçue. Une période d'écoute a par exemple une durée comprise entre 5 à 10 s

Pour sélectionner un canal de réception, un terminal de télé-relève T1-T5 peut par exemple procéder comme suit. Le terminal de télé-relève T1-T5 règle, au cours d'une étape d'écoute, son récepteur sur un canal radio de réception f1, f2 candidat pendant une période d'écoute d'une durée prédéterminée, et si, au cours de cette période d'écoute, il reçoit une trame de données de mise à jour, il sélectionne ledit canal radio de réception f1, f2. Si, au cours de cette période d'écoute, il ne reçoit pas de trame de données de mise à jour, il répète l'étape d'écoute sur un autre canal radio de réception f1, f2 candidat, et ce jusqu'à ce qu'il trouve un canal radio de réception sur lequel il reçoit un trame de données de mise à jour au cours d'une période d'écoute.

Un terminal de télé-relève peut par exemple déterminer si une trame a été reçue en utilisant un code de détection d'erreurs. S'il ne détecte aucune erreur dans la trame reçue ou si les erreurs peuvent être corrigées par le code de détection d'erreurs (qui est alors un code de détection et de correction d'erreurs), le terminal considère la trame comme reçue. Le code de détection d'erreurs peut par exemple être un FCS (frame check sequence) ajouté à la fin d'une trame.

Une trame est par exemple délimitée par une série de bits particulière appelée drapeau. Une trame est par exemple composée d'un header, de données de mise à jour, et d'un postambule. Une trame peut par exemple faire 125 octets.

La qualité du signal reçu sur un canal radio de réception candidat peut également être évaluée en fonction d'un paramètre représentatif du signal. On considère alors qu'un signal a une qualité suffisante pour permettre une réception effective des données de mise à jour, si une mesure du paramètre représentatif du signal a une valeur supérieure à un seuil prédéterminé, et fixé de sorte que les données de mise à jour puissent produire leurs effets lorsque le signal est reçu par le terminal.

Le paramètre représentatif du signal peut par exemple être le débit de données de mise à jour reçues, c'est-à-dire la quantité de données de mise à jour reçues par unité de temps. Le canal radio de réception sélectionné est alors un canal radio de réception pour lequel le débit de données de mise à jour reçues est supérieur à un seuil de débit de données prédéterminé ou le canal radio de réception pour lequel le débit de données de mise à jour reçues est le plus élevé.

Pour évaluer la qualité du signal reçu, un terminal de télé-relève T1-T5 peut par exemple mesurer le débit de données de mise à jour reçues sur le canal, en tant que paramètre représentatif du signal, et sélectionner un canal radio de réception pour lequel le débit de données reçues est supérieur à un seuil de débit de données prédéterminé considéré comme suffisant pour permettre une réception effective des données de mise à jour au cours d'une étape d'émission E23. Le temps total d'émission des données de mise à jour au cours d'une étape d'émission E23 est typiquement compris entre 2 et 5 minutes.

A cet effet, le terminal de télé-relève T1-T5 peut par exemple régler successivement son récepteur sur différents canaux radio d'émission des concentrateurs, et ce jusqu'à ce qu'il détecte un signal reçu avec une qualité suffisante. Un terminal de télé-relève T1-T5 met en moyenne 5s pour mesurer le débit de données reçues. Il peut donc par exemple être prévu qu'un terminal de télé-relève teste chaque canal radio pendant une durée de 5 à 10s.

Si, au cours de l'étape E21, le terminal de télé-relève T1-T5 identifie un canal de réception sur lequel il reçoit un signal de qualité suffisante, il règle, au cours d'une étape E22 de réception des données de mise à jour, son récepteur sur le canal de réception sélectionné à l'étape E21 pour recevoir les données de mise à jour.

Si, au cours de l'étape de sélection d'un canal de réception E21, le terminal de télé-relève T1-T5 n'a trouvé aucun canal de réception sur lequel il reçoit un signal avec une qualité suffisante, il peut être prévu qu'il éteigne son récepteur jusqu'à la prochaine étape de transmission E3 prévue.

Un des avantages du procédé est qu'il n'est pas nécessaire que les concentrateurs connaissent les canaux de réception des terminaux de télé-relève ni que les terminaux de télé-relève connaissent les canaux d'émission des concentrateurs.

Lorsqu'un terminal de télé-relève T1-T5 a reçu l'intégralité des données de mise à jour, il vérifie l'intégrité des données de mise à jour reçues. Les terminaux de télé-relève peuvent utiliser des algorithmes de correction d'erreur pour restaurer les données de mise à jour à partir de données reçues de manière incomplète ou incorrecte. S'il a correctement reçu les données de mise à jour, le terminal de télé-relève T1-T5 émet un message d'acquittement à destination des concentrateurs C1-C4 (ou de son concentrateur associé) qui transmettent le message d'acquittement au serveur de gestion S. Lorsqu'un terminal de télé-relève a correctement reçu les données de mise à jour, il procède à la mise à jour immédiatement ou à un moment ultérieur si une telle instruction est incluse dans les données de mise à jour. Il peut en outre désactiver son récepteur.

Lorsque le serveur de gestion S a reçu un message d'acquittement de la part de l'ensemble des terminaux de télé-relève T1-T5 de la pluralité de terminaux de télé-relève T1-T5 à mettre à jour, il envoie aux concentrateurs C1-C4 l'instruction d'arrêter la transmission des données de mise à jour.

Si le serveur de gestion S n'a pas reçu un message d'acquittement de la part de l'ensemble des terminaux de télé-relève T1-T5 après une durée prédéterminée, une nouvelle étape E2¹ de transmission des données de mise à jour des concentrateurs C1-C4 aux terminaux de télé-relève T1-T5 est prévue. La nouvelle étape E2¹ est identique à la première étape E2 mais avec une nouvelle attribution des canaux d'émission des concentrateurs C1-C4.

Si certains terminaux de télé-relève n'ont pas reçu les données de mise à jour au cours de la première étape E2, il est possible qu'ils les reçoivent correctement lors d'une nouvelle étape E2ⁱ avec i un nombre entier compris entre 1 et n, n étant le nombre maximal d'étapes qui peut être déterminé en fonction de la durée de la campagne de mise à jour planifiée par le serveur, chaque nouvelle étape E2ⁱ constituant une nouvelle chance de recevoir les données de mise à jour pour un terminal de télé-relève.

Les étapes E2ⁱ se succèdent avec à chaque fois une nouvelle attribution des canaux d'émission des concentrateurs C1-C4, et ce jusqu'à ce que le serveur de gestion S ait reçu un message d'acquittement de la part de l'ensemble des terminaux de télé-relève T1-T5 de la pluralité de terminaux de télé-relève T1-T5 à mettre à jour. La nouvelle attribution peut consister à attribuer à nouveau de manière aléatoire un canal radio à chaque concentrateur, ou peut simplement consister à modifier le canal radio de un ou plusieurs des concentrateurs de manière aléatoire ou non, par exemple de manière circulaire parmi l'ensemble de canaux radio d'émission, l'important étant que la nouvelle attribution ne soit pas identique à celle de la précédente étape d'émission.

L'exemple de mise en œuvre illustré par la figure 2 va maintenant être décrit plus en détail, avec les concentrateurs C1 et C3 qui émettent sur le canal radio f1 et les concentrateurs C2 et C4 sur le canal radio f2.

Le terminal de télé-relève T1 reçoit le signal émis par le concentrateur C1 qui émet sur le canal f1 et C2 qui émet sur le canal f2, car il est situé dans les zones de portée d'émission P1 et P2 des concentrateurs C1 et C2 respectivement. Au cours de l'étape E21, le terminal de télé-relève T1 détecte un signal de qualité suffisante en écoutant sur le canal f1. Au cours de l'étape E22, le terminal de télé-relève T1 règle son récepteur sur le canal f1. Après avoir correctement reçu les données de mise à jour, le terminal T1 émet un message d'acquittement à destination du serveur de gestion S.

Le terminal de télé-relève T2 reçoit le signal émis par le concentrateur C2 qui émet sur le canal f2 et C4 qui émet sur le canal f2. Au cours de l'étape E21, le terminal de télé-relève T1 ne détecte un signal de qualité suffisante sur aucun des canaux. En effet, le signal reçu sur le canal f2 n'est pas de qualité suffisante à cause des collisions K générées par les émissions simultanées des concentrateurs C2 et C4.

Le terminal de télé-relève T3 reçoit le signal émis par le concentrateur C1 qui émet sur le canal f1 et C4 qui émet sur le canal f2. Au cours de l'étape E21, le terminal de télé-relève T3 détecte un signal de qualité suffisante sur le canal f1. Au cours de l'étape E22, le terminal de télé-relève T3 règle son récepteur sur le canal f1. Après avoir correctement reçu les données de mise à jour, le terminal T3 émet un message d'acquittement à destination du serveur de gestion S.

Le terminal de télé-relève T4 reçoit le signal émis par le concentrateur C1 qui émet sur le canal f1 et C3 qui émet sur le canal f1. Au cours de l'étape E21, le terminal de télé-relève T4 ne détecte aucun signal de qualité suffisante. En effet, le signal reçu sur le canal f1 n'est pas de qualité suffisante à cause des collisions K générées par les émissions simultanées des concentrateurs C1 et C3.

Le terminal de télé-relève T5 reçoit le signal émis par le concentrateur C1 qui émet sur le canal f1, le concentrateur C3 qui émet sur le canal f1 et C4 qui émet sur le canal f2. Au cours de l'étape E21, le terminal de télé-relève T5 détecte un signal de qualité suffisante sur le canal f2. En revanche, le signal reçu sur le canal f1 n'est pas de qualité suffisante à cause des collisions générées par les émissions simultanées des concentrateurs C1 et C3. Au cours de l'étape E22, le terminal de télé-relève T5 règle son récepteur sur le canal f2. Après avoir correctement reçu les données de mise à jour, le terminal T5 émet un message d'acquittement à destination du serveur de gestion S.

A la fin de la première étape E2, le serveur de gestion S n'ayant pas reçu de message d'acquittement des terminaux de télé-relève T2 et T4, initie une nouvelle étape E2¹ avec une nouvelle répartition, par exemple aléatoire, des canaux de fréquence d'émission des concentrateurs, à savoir le canal f2 pour les concentrateurs C1-C2 et le canal f1 pour les concentrateurs C3-C4.

Au cours de la nouvelle étape E2¹, le terminal de télé-relève T2 reçoit le signal émis par le concentrateur C2 qui émet sur le canal f2 et C4 qui émet sur le canal f1. Au cours d'une étape E21, le terminal de télé-relève T2 détecte un signal de qualité suffisante sur le canal f1. Au cours d'une étape E22, le terminal de télé-relève T2 règle son récepteur sur le canal f1. Après avoir correctement reçu les données de mise à jour, le terminal T2 émet un message d'acquittement à destination du serveur de gestion S.

Au cours de la nouvelle étape E2¹, le terminal de télé-relève T4 reçoit le signal émis par le concentrateur C1 qui émet sur le canal f2 et C3 qui émet sur le canal f1. Au cours d'une étape E21, le terminal de télé-relève T4 détecte un signal de qualité suffisante sur le canal f1. Au cours d'une étape E22, le terminal de télé-relève T2 règle son récepteur sur le canal f1. Après avoir correctement reçu les données de mise à jour, le terminal T2 émet un message d'acquittement à destination du serveur de gestion S.

A la fin de la deuxième occurrence de l'étape E2, le serveur de gestion S a reçu de message d'acquittement des terminaux de télé-relève T2 et T4, et la mise à jour est terminée.

Bien que l'invention ait été décrite en liaison avec plusieurs modes de réalisation particuliers, il est bien évident qu'elle n'y est nullement limitée et que son étendue est définie par les revendications ci-jointes.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

## Revendications

1. Procédé de mise à jour d'un logiciel embarqué dans une pluralité de terminaux de télé-relève (T1-T5) à mettre à jour d'une installation de télé-relève, ladite installation de télé-relève comportant la pluralité de terminaux de télé-relève (T1-T5) à mettre à jour, un serveur de gestion (S), et une pluralité de concentrateurs (C1-C4), chaque terminal de télé-relève (T1-T5) comportant un récepteur, le procédé comportant
une première étape de transmission (E1) de données de mise à jour du serveur de gestion (S) aux concentrateurs (C1-C4) au cours de laquelle chaque concentrateur (C1-C4) reçoit les données de mise à jour de la part du serveur de gestion (S), et
une deuxième étape de transmission (E2, E2¹ et E2ⁱ) des données de mise à jour des concentrateurs (C1-C4) aux terminaux de télé-relève (T1-T5), au cours de laquelle, chaque concentrateur (C1-C4) émet les données de mise à jour sur un canal radio d'émission (f1, f2) sélectionné parmi un ensemble de canaux radio d'émission, ladite deuxième étape de transmission (E2, E2¹, E2ⁱ) comprenant, en outre,
une étape de sélection d'un canal de réception (E21), au cours de laquelle chaque terminal de télé-relève (T1-T5) évalue la qualité du signal reçu sur différents canaux radio de réception candidats appartenant à l'ensemble desdits canaux radio d'émission (f1, f2), et sélectionne, parmi les canaux radio de réception candidats, un canal radio de réception pour lequel la qualité du signal reçu est la meilleure ou suffisante pour permettre une réception effective des données de mise à jour par le terminal de télé-relève (T1-T5), et
une étape de réception (E22), au cours de laquelle chaque terminal de télé-relève (T1-T5) règle son récepteur sur le canal de réception sélectionné (f1, f2) pour recevoir les données de mise à jour
et où, lorsqu'un terminal de télé-relève (T1-T5) a reçu les données de mise à jour, il émet un message d'acquittement à destination du serveur de gestion (S)
et où, si, à la fin de la deuxième étape de transmission (E2) des données de mise à jour des concentrateurs (C1-C4) aux terminaux de télé-relève (T1-T5), le serveur de gestion (S) n'a pas reçu un message d'acquittement de la part de l'ensemble des terminaux de télé-relève (T1-T5) de la pluralité de terminaux de télé-relève (T1-T5) à mettre à jour, la deuxième étape de transmission (E2¹, E2ⁱ) des données de mise à jour des concentrateurs (C1-C4) aux terminaux de télé-relève (T1-T5) est répétée avec une répartition différente des canaux radio d'émission (f1, f2) parmi les concentrateurs (C1-C4).

2. Procédé selon la revendication 1, dans lequel, au cours de l'étape de sélection d'un canal de réception (E21), un terminal de télé-relève (T1-T5) :
règle, au cours d'une étape d'écoute, son récepteur sur un canal radio de réception (f1, f2) candidat pendant une période d'écoute d'une durée prédéterminée, et
si, au cours de cette période d'écoute, il reçoit une trame de données de mise à jour, il sélectionne ledit canal radio de réception (f1, f2),
si, au cours de cette période d'écoute, il ne reçoit pas de trame de données de mise à jour, il répète l'étape d'écoute sur un autre canal radio de réception (f1, f2) candidat.

3. Procédé selon la revendication 2, dans lequel un terminal de télé-relève (T1-T5) détermine si une trame de données de mise à jour a été reçue en utilisant un code de détection d'erreur.

4. Procédé selon l'une des revendications 1 à 3 dans lequel les concentrateurs (C1-C4) émettent, préalablement à la deuxième étape (E2) de transmission des données de mise à jour des concentrateurs (C1-C4) aux terminaux de télé-relève (T1 -T5), un message de planification à destination des terminaux de télé-relève (T1-T5), le message de planification indiquant un instant de début de diffusion des données de mise à jour.

5. Procédé selon la revendication 4, dans lequel le message de planification est envoyé par chaque concentrateur (C1-C4) successivement à l'ensemble des terminaux de télé-relève (T1-T5).

6. Procédé selon l'une des revendications 1 à 5 dans lequel chaque terminal de télé-relève (T1-T5) règle son récepteur sur un seul canal radio à la fois.

7. Procédé selon l'une des revendications 1 à 6 dans lequel chaque concentrateur (C1-C4) émet les données de mise à jour sur un seul canal radio à la fois.

8. Procédé selon l'une des revendications 1 à 7 dans lequel l'ensemble des concentrateurs (C1-C4) émet les données de mise à jour de manière simultanée.

9. Procédé selon l'une des revendications 1 à 8 dans lequel l'attribution des canaux radiofréquences d'émission pour chaque concentrateur (C1-C4) est faite par le serveur de gestion (S) ou par chaque concentrateur pour lui-même.

10. Procédé selon la revendication 9 dans lequel le canal radio d'émission de chaque concentrateur est sélectionné aléatoirement parmi les fréquences radio d'émission (f1, f2).

11. Procédé selon la revendication 9 dans lequel chaque concentrateur (C1-C4) choisit son canal radio d'émission, en analysant le spectre radiofréquence que le dit concentrateur capte et en sélectionnant un des canaux d'émission les moins encombrés.

12. Installation de télé-relève comportant une pluralité de terminaux de télé-relève (T1-T5) à mettre à jour, un serveur de gestion (S), et une pluralité de concentrateurs (C1-C4), et dans laquelle chacun des concentrateurs (C1-C4) est configuré pour recevoir, au cours d'une première étape de transmission (E1) de données de mise à jour du serveur de gestion (S) aux concentrateurs (C1-C4), lesdites données de mise à jour du serveur de gestion (S) et émettre, au cours d'une deuxième étape de transmission (E2, E2¹ et E2ⁱ), lesdites données de mise à jour à destinatior des terminaux de télé-relève (T1-T5) à mettre à jour, chaque concentrateur (C1-C4) étant en outre configuré pour émettre, au cours de la deuxiéme étape de transmission, les données de mise à jour sur un canal radio d'émission (f1, f2) sélectionné parmi un ensemble de canaux radio d'émission, chaque terminal de télé-relève (T1-T5) comportant un récepteur et étant configuré pour :
pendant une étape de sélection d'un canal de réception (E21) comprise dans la deuxième étape de transmission (E2, E2¹, E2ⁱ), évaluer la qualité du signal reçu sur différents canaux radio de réception candidats appartenant à l'ensemble desdits canaux radio d'émission (f1, f2), et sélectionner, parmi les canaux radio de réception candidats, un canal radio de réception pour lequel la qualité du signal reçu est la meilleure ou suffisante pour permettre une réception effective des données de mise à jour par le terminal de télé-relève (T1-T5), et régler, pendant une étape de réception (E22) comprise
dans la deuxième étape de transmission (E2, E2¹, E2¹), son récepteur sur le canal de réception sélectionné (f1, f2) pour recevoir les données de mise à jour
dans laquelle installation chaque terminal de télé-relève (T1-T5) comporte un émetteur radiofréquence et est configuré pour émettre un message d'acquittement à destination du serveur de gestion (S) lorsque ledit terminal de télé-relève (T1-T5) a reçu les données de mise à jour,
et dans laquelle installation chaque concentrateur (C1-C4) est configuré pour répéter la deuxième étape de transmission (E2¹, E2ⁱ)
des données de mise à jour des concentrateurs (C1-C4) aux terminaux de télé-relève (T1-T5) avec une répartition différente des canaux radio d'émission (f1, f2) parmi les concentrateurs (C1-C4) si, à la fin de la deuxième étape de transmission (E2) des données de mise à jour des concentrateurs (C1-C4) aux terminaux de télé-relève (T1-T5), le serveur de gestion (S) n'a pas reçu un message d'acquittement de la part de l'ensemble des terminaux de télé-relève (T1-T5) de la pluralité de terminaux de télé-relève (T1-T5) à mettre à jour.

## Patentansprüche

1. Verfahren zur Aktualisierung einer Software, die in eine Vielzahl von zu aktualisierenden Fernleserterminals (T1-T5) in einer Fernleseranlage integriert ist, wobei die Fernleseranlage die Vielzahl von zu aktualisierenden Fernleserterminals (T1-T5), einen Verwaltungsserver (S) und eine Vielzahl von Konzentratoren (C1-C4) umfasst, wobei jedes Fernleserterminal (T1-T5) einen Empfänger umfasst, wobei das Verfahren umfasst
einen ersten Übertragungsschritt (E1) von Aktualisierungsdaten von dem Verwaltungsserver (S) zu den Konzentratoren (C1-C4), wobei jeder Konzentrator (C1-C4) die Aktualisierungsdaten von dem Verwaltungsserver (S) empfängt, und
einen zweiten Übertragungsschritt (E2, E2¹ und E2ⁱ) der Aktualisierungsdaten von den Konzentratoren (C1-C4) an den von den Konzentratoren (C1-C4) zu den Gegenstellen (T1-T5),
wobei jeder Konzentrator (C1-C4) die Aktualisierungsdaten auf einen Übertragungsfunkkanal (f1, f2) überträgt, der aus einem Satz von Übertragungsfunkkanälen ausgewählt ist, wobei der zweite Übertragungsschritt (E2, E2¹, E2ⁱ) ferner umfasst einen Empfangskanalauswahlschritt (E21), wobei jedes Fernleserterminal (T1-T5) die Qualität des empfangenen Signals auf verschiedenen Kandidatenempfangsfunkkanälen, die zu dem Satz der Übertragungsfunkkanäle (f1, f2) gehören, bewertet und unter den Kandidatenempfangsfunkkanälen einen Empfangsfunkkanal auswählt, für den die Qualität des empfangenen Signals am besten oder ausreichend ist, um einen effektiven Empfang der Aktualisierungsdaten durch das Fernleserterminals (T1-T5) zu ermöglichen, und
einen Empfangsschritt (E22), wobei jedes Fernleserterminal (T1-T5) seinen Empfänger auf den ausgewählten Empfangskanal (f1, f2) einstellt, um die Aktualisierungsdaten zu empfangen
und wobei,
wenn ein Fernleserterminal (T1-T5) die Aktualisierungsdaten erhalten hat, es eine Bestätigungsmeldung an den Verwaltungsserver (S) sendet
und wobei,
wenn der Verwaltungsserver (S) am Ende des zweiten Übertragungsschritts (E2) der Aktualisierungsdaten von den Konzentratoren (C1-C4) zu den Fernleserterminals (T1-T5) keine Bestätigungsnachricht von allen Fernleserterminals (T1-T5) der Vielzahl der zu aktualisierenden Fernleserterminals (T1-T5) erhalten hat, der zweite Übertragungsschritt (E2¹, E2ⁱ) der Aktualisierungsdaten von den Konzentratoren (C1-C4) zu den Fernleserterminals (T1-T5)mit einer anderen Verteilung der Übertragungsfunckanäle (f1, f2) unter den Konzentratoren (C1-C4) wiederholt.

2. Verfahren gemäß Anspruch 1, wobei während des Schritts der Auswahl eines Empfangskanals (E21) ein Fernleserterminal (T1-T5):
während eines Hörschritts seinen Empfänger auf einen Kandidatenempfangsfunkkanal (f1, f2) während einer Hörperiode von voreingestellter Dauer einstellt, und
wenn es während dieser Abhörzeit einen Aktualisierungsdatenrahmen empfängt, es den Empfangsfunkkanal (f1, f2) wählt,
wenn es während dieser Hörperiode keinen Aktualisierungsdatenrahmen empfängt, es den Hörschritt auf einem anderen Kandidatenempfangsfunkkanal (f1, f2) wiederholt.

3. Verfahren gemäß Anspruch 2, wobei ein Fernleserterminal (T1-T5) unter Verwendung eines Fehlererkennungscodes feststellt, ob ein Aktualisierungsdatenrahmen empfangen wurde.

4. Verfahren gemäß einem der Ansprüche 1 bis 3, wobei die Konzentratoren (C1-C4) vor dem zweiten Übertragungsschritt (E2) der Aktualisierungsdaten von den Konzentratoren (C1-C4) zu den Fernleserterminals (T1-T5) eine Planungsnachricht an die Fernleserterminals (T1-T5) senden, wobei die Planungsnachricht einen Zeitpunkt für den Beginn der Übertragung der Aktualisierungsdaten angibt.

5. Verfahren gemäß Anspruch 4, wobei die Planungsnachricht von jedem Konzentrator (C1-C4) nacheinander an alle Fernleserterminal (T1-T5) gesendet wird.

6. Verfahren gemäß einem der Ansprüche 1 bis 5, wobei jedes Fernleserterminal (T1-T5) seinen Empfänger jeweils auf einen einzigen Funkkanal einstellt.

7. Verfahren gemäß einem der Ansprüche 1 bis 6, wobei jeder Konzentrator (C1-C4) die Aktualisierungsdaten auf jeweils einen einzigen Funkkanal überträgt.

8. Verfahren gemäß einem der Ansprüche 1 bis 7, wobei alle Konzentratoren (C1-C4) die Aktualisierungsdaten gleichzeitig übertragen.

9. Verfahren gemäß einem der Ansprüche 1 bis 8, wobei die Zuweisung von Übertragungsfunkkanal für jeden Konzentrator (C1-C4) durch den Verwaltungsserver (S) oder durch jeden Konzentrator selbst erfolgt.

10. Verfahren gemäß Anspruch 9, wobei der Übertragungsfunkkanal des Konzentrators zufällig unter den Funkübertragungsfrequenzen (f1, f2) ausgewählt wird.

11. Verfahren gemäß Anspruch 9, wobei jeder Konzentrator (C1-C4) seinen Übertragungsfunkkanal auswählt, indem er das Funkfrequenzspektrum, das der Konzentrator empfängt, analysiert und einen der am wenigsten überlasteten Übertragungskanäle auswählt.

12. Fernleseranlage umfassend eine Vielzahl von zu aktualisierenden Fernleserterminals (T1-T5), einen Verwaltungsserver (S) und eine Vielzahl von Konzentratoren (C1-C4), und wobei
jeder der Konzentratoren (C1-C4) konfiguriert ist, um während einem ersten Übertragungsschritt (E1) von Aktualisierungsdaten vom Verwaltungsserver (S) an die Konzentratoren (C1-C4) die Aktualisierungsdaten vom Verwaltungsserver (S) zu empfangen, und in einem zweiten Übertragungsschritt (E2, E2¹ und E2ⁱ) die Aktualisierungsdaten an die zu aktualisierenden Fernleserterminals (T1-T5) zu übertragen,
wobei jeder Konzentrator (C1-C4) ferner konfiguriert ist, um in dem zweiten Übertragungsschritt die Aktualisierungsdaten auf einen Übertragungsfunkkanal (f1' f2) zu übertragen, der aus einem Satz von Übertragungsfunkkanälen ausgewählt ist, wobei jedes Fernleserterminal (T1-T5) einen Empfänger umfasst und konfiguriert ist, um:
während eines Empfangskanalauswahlschritts (E21), der von dem zweiten Übertragungsschritt (E2, E2¹, E2ⁱ) umfasst ist, die Qualität des Signals zu bewerten, das auf den verschiedenen Kandidatenempfangsfunkkanälen empfangen wird, die zu dem Satz der Übertragungsfunkkanäle (f1, f2) gehören, und unter den Kandidatenempfangsfunkkanälen einen Empfangsfunkkanal, für den die Qualität des empfangenen Signals am besten oder ausreichend ist, auszuwählen, um einen effektiven Empfang der Aktualisierungsdaten durch das entfernte Endgerät (T1-T5) zu ermöglichen, und
während eines von dem zweiten Übertragungsschritt (E2, E2¹, E2ⁱ) umfassten Empfangsschritts (E22) seinen Empfänger auf den ausgewählten Empfangskanal (f1, f2) zu regeln, um die Aktualisierungsdaten zu empfangen, in welcher Anlage jedes Fernleserterminal (T1-T5) einen Funkfrequenzsender umfasst und konfiguriert ist, eine Bestätigungsnachricht an den Verwaltungsserver (S) zu senden, wenn das Fernleserterminal (T1-T5) die Aktualisierungsdaten empfangen hat,
und in welcher Anlage jeder Konzentrator (C1-C4) konfiguriert ist, um den zweiten Übertragungsschritt (E2¹, E2ⁱ) der Aktualisierungsdaten von den Konzentratoren (C1-C4) zu den Fernleserterminals (T1-T5) mit einer unterschiedlichen Verteilung der Übertragungsfunkkanäle (f1, f2) unter den Konzentratoren (C1-C4) zu wiederholen,
wenn der Verwaltungsserver (S) am Ende des zweiten Übertragungsschritts (E2) der Aktualisierungsdaten von den Konzentratoren (C1-C4) zu den Fernleserterminals (T1-T5) keine Bestätigungsnachricht von allen Fernleserterminals (T1-T5) der Vielzahl der zu aktualisierenden Fernleserterminals (T1-T5) erhalten hat.

## Claims

1. Method for updating software integrated in a plurality of remote reading terminals (T1-T5) to be updated in an remote reading installation, said remote reading installation comprising the plurality of remote reading terminals (T1-T5) to be updated, a management server (S) and a plurality of concentrators (C1-C4), each remote reading terminal (T1-T5) comprising a receiver, the method comprising
a first step (S1) of transmission of update data from the management server (S) to the concentrators (C1-C4) during which each concentrator (C1-C4) receives the update data from the management server (S), and
a second step (S2, S2¹ and S2ⁱ) of transmission of the update data from the concentrators (C1-C4) to the remote reading terminals (T1-T5), during which each concentrator (C1-C4) transmits the update data on a radio transmission channel (f1, f2) selected from a set of radio transmission channels, said second transmission step (S2, S2¹, S2ⁱ) comprising, in addition,
a reception channel selection step (S21), during which each remote reading terminal (T1-T5) evaluates the quality of the signal received on various candidate radio reception channels belonging to all of said radio transmission channels (f1, f2), and selects, among the candidate radio reception channels, a radio reception channel for which the quality of the signal received is the best or sufficient to enable effective reception of the update data by the remote reading terminal (T1-T5), and
a reception step (S22), during which each remote reading terminal (T1-T5) adjusts its receiver to the selected reception channel (f1, f2) to receive the update data
and in which,
when a remote reading terminal (T1-T5) has received the update data, it transmits an acknowledgement message to the management server (S)
and in which, if,
at the end of the second step (S2) of transmission of the update data from the concentrators (C1-C4) to the remote reading terminals (T1-T5), the management server (S) has not received an acknowledgement message from all of the remote reading terminals (T1-T5) in the plurality of remote reading terminals (T1-T5) to be updated, the second step (S2¹, S2ⁱ) of transmission of the update data from the concentrators (C1-C4) to the remote reading terminals (T1-T5) is repeated with a different distribution of the radio transmission channels (f1, f2) among the concentrators (C1-C4).

2. Method according to claim 1, in which, during the reception channel selection step (S21), a remote reading terminal (T1-T5):
during a listening step, adjusts its receiver to a candidate radio reception channel (f1, f2) for a listening period of predetermined length, and
if, during this listening period, it receives an update data frame, it selects said radio reception channel (f1, f2),
if, during this listening period, it does not receive an update data frame, it repeats the listening step on another candidate radio reception channel (f1, f2).

3. Method according to claim 2, in which a remote reading terminal (T1-T5) determines whether an update data frame has been received by using an error detection code.

4. Method according to one of claims 1 to 3 in which the concentrators (C1-C4) transmit, prior to the second step (S2) of transmission of the update data from the concentrators (C1-C4) to the remote reading terminals (T1-T5), a planning message to the remote reading terminals (T1-T5), the planning message indicating a starting time for transmission of the update data.

5. Method according to claim 4, in which the planning message is sent by each concentrator (C1-C4) successively to all of the remote reading terminals (T1-T5).

6. Method according to one of claims 1 to 5 in which each remote reading terminal (T1-T5) adjusts its receiver to a single radio channel at a time.

7. Method according to one of claims 1 to 6 in which each concentrator (C1-C4) transmits the update data on a single radio channel at a time.

8. Method according to one of claims 1 to 7 in which each all of the concentrators (C1-C4) transmit the update data simultaneously.

9. Method according to one of claims 1 to 8 in which the allocation of the radio frequency transmission channels for each concentrator (C1-C4) is carried out by the management server (S) or by each concentrator for itself.

10. Method according to claim 9 in which the radio transmission channel of each concentrator is selected randomly among the radio transmission frequencies (f1, f2).

11. Method according to claim 9 in which each concentrator (C1-C4) chooses its radio transmission channel, by analysing the radio frequency spectrum which said concentrator receives and selecting one of the least congested transmission channels.

12. Remote reading installation comprising a plurality of remote reading terminals (T1-T5) to be updated, a management server (S) and a plurality of concentrators (C1-C4), and in which each of the concentrators (C1-C4) is configured to receive, during a first step (S1) of transmission of update data from the management server (S) to the concentrators (C1-C4), said update data from the management server, and to transmit, during a second transmission step (S2, S2¹ and S2ⁱ), said update data to the remote reading terminals (T1-T5) to be updated, each concentrator (C1-C4) also being configured to transmit, during the second transmission step, the update data on a radio transmission channel (f1, f2) selected from a set of radio transmission channels,
each remote reading terminal (T1-T5) comprising a receiver and being configured to:
during a reception channel selection step (S21) comprised in the second transmission step (S2, S2¹, S2ⁱ),
evaluate the quality of the signal received on various candidate radio reception channels belonging to all of said radio transmission channels (f1, f2), and select, among the candidate radio reception channels, a radio reception channel for which the quality of the signal received is the best or sufficient to enable effective reception of the update data by the remote reading terminal (T1-T5), and
adjust, during a reception step (S22) comprised in the second transmission step (S2, S2¹, S2ⁱ), its receiver to the selected reception channel (f1, f2) to receive the update data
in which installation each remote reading terminal (T1-T5) comprises a radio frequency transmitter and is configured to transmit an acknowledgement message to the management server (S) when said remote reading terminal (T1-T5) has received the update data, and in which installation
each concentrator (C1-C4) is configured to repeat the second step (S2¹, S2ⁱ) of transmission of the update data from the concentrators (C1-C4) to the remote reading terminals (T1-T5) with a different distribution of the radio transmission channels (f1, f2) among the concentrators (C1-C4) if, at the end of the second step (S2) of transmission of the update data from the concentrators (C1-C4) to the remote reading terminals (T1-T5), the management server (S) has not received an acknowledgement message from all of the remote reading terminals (T1-T5) in the plurality of remote reading terminals (T1-T5) to be updated.
